# EUROPÄISCHE PATENTSCHRIFT

(11) **EP 3 021 093 B1**
(45) Veröffentlichungstag und Bekanntmachung des Hinweises auf die Patenterteilung: **19.09.2018**
(21) Anmeldenummer: 15193541.8
(22) Anmeldetag: 06.11.2015
(51) Int. Cl.: G01G 11/00

(54) **BANDWAAGE**
BELT WEIGHER
BASCULE À COURROIE

(30) Priorität: 13.11.2014 DE 202014105472 U
(43) Veröffentlichungstag der Anmeldung: 18.05.2016
(73) Patentinhaber: Janner, Siegfried, 92708 Mantel (DE)
(72) Erfinder: Janner, Siegfried, 92708 Mantel (DE)
(74) Vertreter: Lang, Christian

(56) Entgegenhaltungen:
- WO-A1-2008/125484

## Beschreibung

### HINTERGRUND DER ERFINDUNG

### GEBIET DER ERFINDUNG

Die vorliegende Erfindung betrifft eine Bandwaage für einen Bandförderer, mit der auf dem Bandförderer befördertes Gut gewogen werden kann.

### STAND DER TECHNIK

Bandförderer werden in vielen Bereichen der Technik zum Transport von Gütern, sei es Stückgüter oder Schüttgüter, eingesetzt. Hierzu wird üblicherweise ein Endlosband im Kreis geführt, wobei das Band durch Antriebsrollen angetrieben und durch Stützrollen gestützt wird.

In bestimmten Anwendungsfällen ist es erforderlich das Gewicht der auf dem Bandförderer transportierten Güter zu messen. Hierzu kann eine Bandwaage eingesetzt werden, bei welcher Stützrollen durch Rollen, die in der Bandwaage integriert oder an einer Bandwaage angeordnet sind, ersetzt werden. Dadurch lässt sich bei Gütern, die über die Bandwaage gefördert werden, das Gewicht derselben bestimmen.

Eine andere Art einer Wäge - Fördereinrichtung ist in dem Dokument WO 2008 / 125484 A1 gezeigt. Bei dieser Einrichtung wird nicht eine Stützrolle des Bandförderer durch eine in einer Waage integrierte Rolle ersetzt, sondern die Einrichtung stellt einen kurzen Bandförderer mit integrierter Wägeeinheit dar.

### OFFENBARUNG DER ERFINDUNG

### AUFGABE DER ERFINDUNG

Es ist Aufgabe der vorliegenden Erfindung eine Bandwaage bereitzustellen, die sich durch einen besonders einfachen, aber stabilen Aufbau auszeichnet, der eine zuverlässige, sichere Ermittlung des Gewichts von auf dem Bandförderer beförderten Güter ermöglicht, aber den Aufwand für die Herstellung der Bandwaage niedrig hält.

### TECHNISCHE LÖSUNG

Diese Aufgabe wird gelöst durch eine Bandwaage mit den Merkmalen des Anspruchs 1. Vorteilhafte Ausgestaltungen sind Gegenstand der abhängigen Ansprüche.

Durch die charakteristische Herstellung des oder der Rahmenteile kann eine stabile Ausführungsform eines Rahmenteils bei gleichzeitig geringem Herstellungsaufwand erzielt werden.

Unter Blech ist hierbei ein platten- oder scheibenförmiges Metallteil zu verstehen, welches aus Stahllegierungen, insbesondere Edelstahllegierungen oder anderen geeigneten technischen Legierungen gebildet sein kann, die durch Biegen insbesondere kalt umgeformt werden können.

Die Dicke des Blechs kann von einigen Millimetern bis zu einigen Zentimetern reichen, insbesondere bis zu drei Zentimeter, wobei die Grenze der Dicke des Blechs durch das Umformen, insbesondere Kaltumformen bzw. Biegen definiert ist. Sofern eine Biege- oder Kantmaschine zur Verfügung steht, die dickere Bleche mit der erforderlichen Genauigkeit biegen oder kanten kann, kann die Dicke des Blechs auch entsprechend erhöht werden. Ziel ist es nämlich ein möglichst stabiles Rahmenteil zu schaffen, welches steif gegenüber Durchbiegung, Verwindung und/oder Dehnung ist, um zu gewährleisten, dass ein möglichst gutes Messergebnis durch die Bandwaage erzielt werden kann.

Erfindungsgemäss wird das untere Rahmenteil der Bandwaage ganz einstückig aus einem Blech gefertigt, sodass bei dem Rahmenteil kein zusätzliches stoffschlüssiges Verbinden, wie beispielsweise durch Schweißen oder dergleichen, erforderlich ist. Entsprechend zeichnet sich ein derartiges Rahmenteil, auch in Bezug auf einen Teil des Rahmenteils dadurch aus, dass es ein dreidimensionaler Formkörper ist, der durch entsprechende winklige Anordnung von Plattenbereichen, die aus einer Blechebene hervorstehen, definiert ist, welcher keine stoffschlüssigen Verbindungen, wie beispielsweise Schweißnähte oder dergleichen aufweist. Dadurch ist eine besondere effiziente und einfache Herstellung gewährleistet, wobei durch die abgewinkelten und abgebogenen Bereiche des Blechs eine ausreichende Versteifung des Rahmenteils gegeben ist, die die erforderliche Steifigkeit zur Verwendung in der Bandwaage bereitstellt.

Das untere Rahmenteil kann durch einen länglichen Mittelkörper in Form eines L- oder U-Profils gebildet sein, welcher an seinen gegenüberliegenden Enden Halterungen aufweist, die zur Befestigung in einem Bandförderer dienen.

Der Mittelkörper kann im Querschnitt insbesondere durch ein L-Profil mit einer unteren Rahmenplatte und einem quer dazu gebogenen Versteifungssteg gebildet sein, der sich entlang der Längsseite des Mittelkörpers erstreckt. Dadurch ist eine gute Biegesteifigkeit des Mittelkörpers gegeben.

Die an den Enden des Mittelkörpers angeordnete Halterung kann eine zu der unteren Rahmenplatte quer, insbesondere senkrecht gebogene Vertikalplatte aufweisen, an der wiederum quer und insbesondere senkrecht zur Vertikalplatte gebogene Laschen angeordnet sind, die zur Auflage auf einem Rahmen des Bandförderers dienen können.

Um das Blech vor dem Biegen und Kanten entsprechend zu- und/oder auszuschneiden, sodass die gebogenen Bereiche anschließend die gewünschten Komponenten des Rahmenteils ergeben, wird das Blech vorzugsweise mittels Laser geschnitten.

### KURZBESCHREIBUNG DER FIGUREN

Die beigefügten Zeichnungen zeigen in rein schematischer Weise in
Fig. 1 eine Seitenansicht einer erfindungsgemäßen Bandwaage,
Fig. 2 eine Draufsicht auf das untere Rahmenteil der Bandwaage aus Fig. 1 und in
Fig. 3 eine Draufsicht auf ein einstückiges, ausgeschnittenes Blech vor dem Kanten zur Ausbildung des unteren Rahmenteils aus Fig. 2.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels deutlich. Allerdings ist die Erfindung nicht auf dieses Ausführungsbeispiel beschränkt.

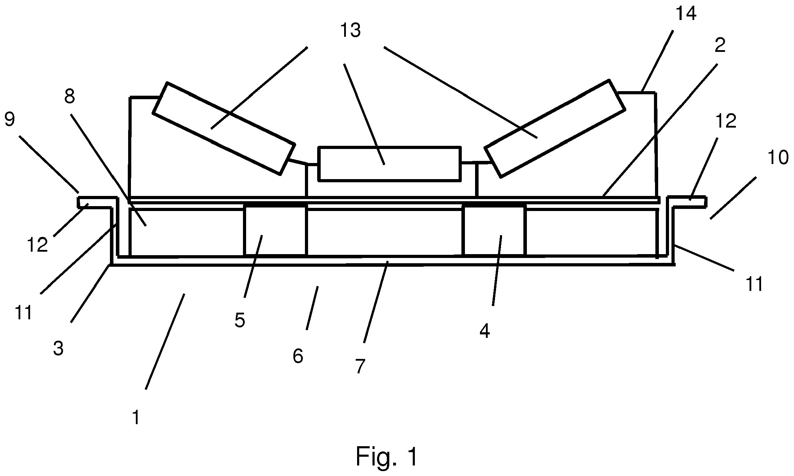

Die Fig. 1 zeigt eine Seitenansicht einer erfindungsgemäßen Bandwaage 1 mit einem oberen Rahmenteil 2 und einem unteren Rahmenteil 3 zwischen denen zwei Wägezellen 4, 5 befestigt sind. Das obere Rahmenteil 2 ist als Platte ausgebildet, welche direkt mit den Wägezellen 4 und 5 verschraubt ist. Das untere Rahmenteil 3 ist aus einem einstückigen Blech durch Aus- und/oder Einschneiden mittels Laserschneiden und entsprechendes Biegen und Kanten gebildet. Das untere Rahmenteil 3 umfasst einen Mittelkörper 6 mit einer unteren Rahmenplatte 7 und einem senkrecht dazu angeordneten Profilsteg 8, sodass sich im Querschnitt ein L-Profil ergibt, welches eine ausreichende Biegesteifigkeit aufweist. An den Enden des Mittelkörpers 6 sind Halterungen 9, 10 ausgebildet, welche jeweils eine Vertikalplatte 11 aufweisen, die senkrecht von der unteren Rahmenplatte 7 nach oben steht. An der Vertikalplatte 11 sind jeweils quer, insbesondere senkrecht hervorstehende Laschen 12 ausgebildet, mit deren Hilfe die Bandwaage in einem Bandförderer angeordnet wird.

Die Wägezellen 4 und 5 sind ebenfalls mit der Platte 7 des Mittelkörpers 6 direkt verschraubt.

An dem oberen Rahmenteil 2 sind gegenüberliegend der Seite, an der die Wägezellen 4, 5 befestigt sind, Transportrollen 13 für das Band (nicht gezeigt) mittels einen Rollenstuhls 14 angeordnet. Bei dem gezeigten Ausführungsbeispiel sind drei Rollen 13 vorgesehen, wobei die äußeren Rollen 13 schräg zur Mittelrolle 13 angeordnet sind, sodass das Band wannenförmig ausgebildet ist. Damit kann auf dem Bandförderer beispielsweise Schüttgut transportiert werden, welches beim Vorbeilaufen über die Bandwaage gewogen werden kann. Dazu sind die Wägezellen 4, 5 mit einer Auswerteeinheit (nicht gezeigt) verbunden, die die elektronischen Signale der Wägezellen in geeigneter Weise auswerten kann.

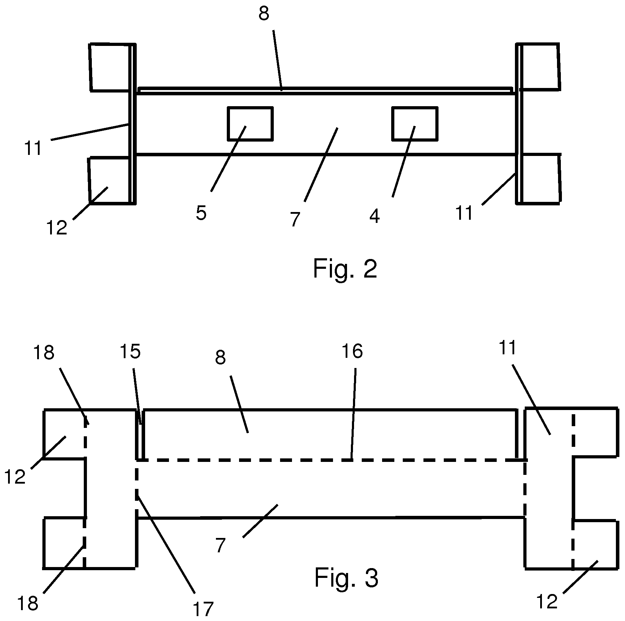

Das untere Rahmenteil 3 ist, wie beschrieben, einstückig aus einem Metallblech durch Aus- und Einschneiden des Metallblechs sowie Umbiegen und Kanten von bestimmten Teilen des ausgeschnittenen Blechs gebildet. In Fig. 2 ist das untere Rahmenteil 3 in einer Draufsicht gezeigt und zwar mit der Anordnung der Wägezellen 4, 5. Wie in Fig. 2 zu sehen ist, verbindet der Mittelkörper 6 mit der unteren Rahmenplatte 7 die beiden Vertikalplatten 11, an deren Enden senkrecht hervorstehende Laschen 12 ausgebildet sind. Der Versteifungssteg 8 steht senkrecht von der unteren Rahmenplatte 7 hervor.

Die Fig. 3 zeigt ein ausgeschnittenes Blech vor dem Umbiegen und Kanten zur Bildung des unteren Rahmenteils 3. In Fig. 3 sind die Biege- und Kantlinien 16, 17, 18, an welchen das Blech gebogen wird gestrichelt dargestellt.

Wie in Fig. 3 gezeigt, wird das Blech durch Laserschneiden in eine äußere Form gebracht, die es erlaubt, dass die Laschen 12 und die Vertikalplatten 11 sowie der Versteifungssteg 8 durch entsprechendes Biegen an den Biegekanten 16, 17 und 18 in die Form des unteren Rahmenteils gebogen werden. Zwischen den Vertikalplatten 11 und dem Verstärkungssteg 8 sind Einschnitte 15 vorgesehen, die ein senkrechtes Hochbiegen des Verstärkungsstegs 8 von der unteren Rahmenplatte 7 ermöglichen und gleichzeitig ein vertikales Hochbiegen der Vertikalplatten 11 gegenüber der Rahmenplatte 7 gewährleisten.

Die Laschen 12 können bezüglich der Vertikalplatten 11 entweder vor oder nach dem Biegen der Vertikalplatten 11 entlang der Biegekanten 17 um die Biegekanten 18 gebogen werden.

Mit dem gezeigten Ausführungsbeispiel ist eine Bandwaage geschaffen, die sich durch einen einfachen und effizienten Aufbau auszeichnet und dadurch eine kostengünstige und gleichwohl stabile Herstellung ermöglicht.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist.

## Patentansprüche

1. Bandwaage zum Einbau in einen Bandförderer mit mindestens einer Stützrolle (13), über die ein Band des Bandförderers geführt werden kann, und mit einem oberen und unteren Rahmenteil (2,3), zwischen denen mindestens eine Wägezelle (4,5) angeordnet ist, wobei die mindestens eine Stützrolle am oberen Rahmenteil (2) der Bandwaage angeordnet ist,
**dadurch gekennzeichnet, dass**
das untere Rahmenteil (3) ganz einstückig aus einem Blech gefertigt ist, welches durch Aus - und/oder Einschneiden des Blechs und Biegen von Teilbereichen des Blechs zu einem dreidimensionalen Formkörper geformt ist.

2. Bandwaage nach Anspruch 1,
**dadurch gekennzeichnet, dass**
das untere Rahmenteil (3) einen Mittelkörper (6) und an gegenüber liegenden Enden des Mittelkörpers Halterungen (9,10) aufweist.

3. Bandwaage nach Anspruch 2,
**dadurch gekennzeichnet, dass**
der Mittelkörper eine untere Rahmenplatte (7) aufweist, an der vorzugsweise ein quer dazu gebogener Versteifungssteg (8) angeordnet ist, der sich entlang der Längsseite des Mittelkörpers erstreckt.

4. Bandwaage nach Anspruch 3,
**dadurch gekennzeichnet, dass**
die Halterung eine zu der unteren Rahmenplatte (7) quer, insbesondere senkrecht dazu gebogene Vertikalplatte (11) aufweist.

5. Bandwaage nach Anspruch 4,
**dadurch gekennzeichnet, dass**
die Halterung mindestens eine quer zur Vertikalplatte gebogene Lasche (12) zur Lagerung auf einem Bandförderer aufweist.

6. Bandwaage nach einem der vorhergehenden Ansprüche,
**dadurch gekennzeichnet, dass**
das Blech lasergeschnitten ist

7. Bandwaage nach einem der vorhergehenden Ansprüche,
**dadurch gekennzeichnet, dass**
die Wägezelle (4,5) mit dem oberen und/oder unteren Rahmenteil (2,3) verschraubt ist.

8. Bandwaage nach einem der vorhergehenden Ansprüche,
**dadurch gekennzeichnet, dass**
das obere Rahmenteil (2) eine längliche Platte ist.

9. Bandwaage nach einem der vorhergehenden Ansprüche,
**dadurch gekennzeichnet, dass**
die Bandwaage zwei Wägezellen (4,5) umfasst.

## Claims

1. Belt weigher for installation in a belt conveyor, comprising at least one support roller (13), over which a belt of the belt conveyor can be guided, and an upper and lower frame section (2, 3), between which at least one load cell (4, 5) is disposed, wherein the at least one support roller is disposed on the upper frame section (2) of the belt weigher,
**characterised in that**
the lower frame section (3) is made entirely in one piece from sheet metal, which is formed into a three-dimensional shaped body by cutting out and/or cutting into the sheet metal and bending parts of the sheet metal.

2. Belt weigher according to claim 1,
**characterised in that**
the lower frame section (3) has a central body (6) and holders (9, 10) at opposite ends of the central body.

3. Belt weigher according to claim 2,
**characterised in that**
the central body has a lower frame plate (7) on which is preferably disposed a reinforcing web (8) bent transversely thereto, which extends along the longitudinal side of the central body.

4. Belt weigher according to claim 3,
**characterised in that**
the holder has a vertical plate (11) bent transversely, in particular perpendicularly, to the lower frame plate (7).

5. Belt weigher according to claim 4,
**characterised in that**
the holder has at least one tab (12) bent transversely to the vertical plate for mounting on a belt conveyor.

6. Belt weigher according to any of the previous claims,
**characterised in that**
the sheet is laser-cut.

7. Belt weigher according to any of the previous claims,
**characterised in that**
the load cell (4, 5) is screwed to the upper and/or lower frame section (2, 3).

8. Belt weigher according to any of the previous claims,
**characterised in that**
the upper frame section (2) is an elongated plate.

9. Belt weigher according to any of the previous claims,
**characterised in that**
the belt weigher comprises two load cells (4, 5).

## Revendications

1. Bascule à bande à monter dans un convoyeur à bande avec au moins un galet d'appui (13) par lequel une bande du convoyeur à bande peut être guidée et avec une partie supérieure de châssis et une partie inférieure de châssis (2, 3) entre lesquelles au moins une cellule de pesée (4, 5) est placée, cependant que le galet d'appui qui existe au moins est placé sur la partie supérieure de châssis (2) de la bascule à bande,
**caractérisée en ce que**
la partie inférieure de châssis est fabriquée entièrement en une pièce en une tôle qui est formée en découpant et/ou en entaillant la tôle et en repliant des zones partielles de la tôle en un corps moulé tridimensionnel.

2. Bascule à bande selon la revendication 1,
**caractérisée en ce que**
la partie inférieure de châssis (3) présente un corps médian (6) et des supports (9, 10) à des extrémités opposées du corps médian.

3. Bascule à bande selon la revendication 2,
**caractérisée en ce que**
le corps médian présente une plaque inférieure de châssis (7) sur laquelle une baguette de renforcement (8) pliée transversalement par rapport à celle-ci est de préférence placée, baguette de renforcement qui s'étend le long du long côté du corps médian.

4. Bascule à bande selon la revendication 3,
**caractérisée en ce que**
le support présente une plaque verticale (11) transversale par rapport à la plaque inférieure de châssis (7), en particulier perpendiculairement à celle-ci.

5. Bascule à bande selon la revendication 4,
**caractérisée en ce que**
le support présente au moins une patte (12) courbée transversalement par rapport à la plaque verticale pour le stockage sur un convoyeur à bande.

6. Bascule à bande selon l'une des revendications précédentes,
**caractérisée en ce que**
la tôle est découpée au laser.

7. Bascule à bande selon l'une des revendications précédentes,
**caractérisée en ce que**
la cellule de pesée (4, 5) est vissé à la plaque supérieure et/ou inférieure de châssis (2, 3).

8. Bascule à bande selon l'une des revendications précédentes,
**caractérisée en ce que**
la partie supérieure de châssis (2) est une plaque allongée.

9. Bascule à bande selon l'une des revendications précédentes,
**caractérisée en ce que**
la bascule à bande comprend deux cellules de pesée (4, 5).
